# FASCICULE DE BREVET EUROPEEN

(11) **EP 3 329 645 B1**
(45) Date de publication et mention de la délivrance du brevet: **01.01.2020**
(21) Numéro de dépôt: 16742232.8
(22) Date de dépôt: 18.07.2016
(51) Int. Cl.: H04L 12/26, H04L 12/917, H04L 12/851, H04L 12/927

(54) **PROCEDE DE GESTION DE BANDE PASSANTE PAR UN DISPOSITIF D'INTERCONNEXION DE RESEAUX DE COMMUNICATION**
VERFAHREN ZUR BANDBREITENVERWALTUNG MITTELS EINER VORRICHTUNG ZUR VERBINDUNG VON KOMMUNIKATIONSNETZEN
METHOD FOR MANAGING BANDWIDTH BY MEANS OF A DEVICE FOR INTERCONNECTING COMMUNICATION NETWORKS

(30) Priorité: 31.07.2015 FR 1557419
(43) Date de publication de la demande: 06.06.2018
(73) Titulaire: Sagemcom Broadband SAS, 92500 Rueil-Malmaison (FR)
(72) Inventeur: FADLE, Hatim, 92500 Rueil Malmaison (FR); REUCHE, Anthony, 92500 Rueil Malmaison (FR)
(74) Mandataire: Cabinet Le Guen Maillet
(86) Numéro de dépôt international: PCT/EP2016/067020
(87) Numéro de publication internationale: WO 2017/021129

(56) Documents cités:
- EP-A1- 2 573 997
- CN-A- 101 237 391
- US-A1- 2010 094 989
- US-A1- 2013 275 578
- KOFLER I ET AL: "Improving IPTV services by H.264/SVC adaptation and traffic control", BROADBAND MULTIMEDIA SYSTEMS AND BROADCASTING, 2009. BMSB '09. IEEE INTERNATIONAL SYMPOSIUM ON, IEEE, PISCATAWAY, NJ, USA, 13 mai 2009 (2009-05-13), pages 1-6, XP031480123, ISBN: 978-1-4244-2590-7

## Description

La présente invention concerne une adaptation dynamique de réservation de bande passante pour des flux de données transitant entre des premier et second réseaux de communication via un dispositif d'interconnexion.

Parmi les dispositifs d'interconnexion de premier et second réseaux de communication, on trouve notamment les équipements de type passerelles résidentielles. De tels équipements permettent d'interconnecter un premier réseau de type LAN (« Local Area Network » en anglais) ou WLAN (« Wireless LAN » en anglais) et un second réseau de communication de type WAN (« Wide-Area Network » en anglais), afin notamment de permettre à des dispositifs de communication connectés au LAN ou WLAN d'accéder à l'Internet, de recevoir ou d'émettre des appels téléphonique, de recevoir la télévision (TV) sur IP (« Internet Protocol » en anglais, tel que défini dans le document normatif RFC 791). Dans le cadre d'implémentations de services, des flux de données transitent entre les premier et second réseaux de communication, via ledit dispositif d'interconnexion. Ces flux de données sont typiquement catégorisées en fonction du service auquel lesdits flux de données sont rattachés. A chaque type (ou catégorie) de flux de données correspond des contraintes de débit et/ou de latence qu'il convient de respecter en fonction de la Qualité de Service QoS (« Quality of Service » en anglais) requise par le service auquel le flux de données considéré est rattaché.

L'évolution des technologies favorisant l'augmentation du débit est totalement dissocié entre les réseaux de communication WAN et LAN. En effet, actuellement l'augmentation des capacités des réseaux de communication LAN est bien plus importante que l'augmentation des capacités des réseaux de communication WAN. De plus, s'ajoute le fait que les passerelles domestiques ont des possibilités de connectique côté LAN qui augmente rapidement (par exemple : Gigabit Ethernet, Wi-Fi, Bluetooth,...) alors que la connectique côté WAN évolue moins vite. Ainsi, le besoin de réguler et gérer les différents flux de données qui transitent via le dispositif d'interconnexion est primordial. Tout l'enjeu des systèmes actuels est donc de pouvoir offrir un maximum de débit utile coté LAN tout en respectant les contraintes de services en termes de débit et de latence coté WAN. Pour cela il convient de proposer un débit utile côté WAN au plus proche du débit physique, c'est-à-dire en évitant les réservations de bande passante inutiles qui nuisent à une bonne gestion du contrôle d'admission.

Une telle situation est flagrante en ce qui concerne les passerelles résidentielles, mais se rencontre aussi au sein d'autres dispositifs d'interconnexion de réseaux de communication.

Il est connu le document US 2013/275578 A1 qui divulgue un mécanisme limitant l'utilisation d'une bande passante de réseau par un dispositif de calcul en fonction d'une catégorie d'usage attribuée audit dispositif de calcul en fonction d'un usage précédent de bande passante par ledit dispositif de calcul et d'un seuil.

Il est aussi connu le document « Improving IPTV Services by H.264/SVC Adaptation and Traffic Control », Ingo Kofler et al, IEEE International Symposium on Broadband Multimedia Systems and Broadcasting, 2009 (XP031480123) qui divulgue deux approches de réservations de bande passante, l'une conservative appelée « Hard Réservation Policy » et une autre plus flexible appelée « Flexible Borrowing Policy ».

Le document CN101237391 divulgue un dispositif et un procédé d'ajustement dynamique de bande passante, dans lesquels une unité de détection est utilisée pour mesurer si la bande passante dépasse un premier seuil prédéterminé ou est inférieure à un second seuil prédéterminé, et si tel est le cas, la bande passante est ajustée en conséquence de façon dynamique.

Il est souhaitable de pallier ces inconvénients de l'état de la technique. Il est ainsi souhaitable de fournir une solution qui permette d'améliorer la gestion de la réservation de bande passante pour des flux de données transitant entre un premier réseau de communication et un second réseau de communication interconnectés via un dispositif d'interconnexion. Il est aussi souhaitable de fournir une solution qui soit autonome. Il est aussi souhaitable de fournir une solution qui soit peu consommatrice en ressources de traitement (et par voie de conséquence peu consommatrice en ressources énergétique).

L'invention concerne un procédé de gestion de bande passante implémenté par un dispositif d'interconnexion entre un premier réseau de communication et un second réseau de communication, des flux de données critiques et des flux de données non critiques transitant entre les premier et second réseaux de communication via ledit dispositif d'interconnexion, les flux de données critiques ayant contrairement aux flux de données non critiques un besoin de réservation de bande passante pour assurer des contraintes de débit et de latence. Ledit procédé est tel que le dispositif d'interconnexion implémente un mécanisme de surveillance des flux de données critiques transitant entre les premier et second réseaux de communication via ledit dispositif d'interconnexion de telle sorte que, pour chaque flux de données critiques transitant entre les premier et second réseaux de communication via ledit dispositif d'interconnexion, le dispositif d'interconnexion effectue les étapes suivantes : mesurer un débit effectif dudit flux de données critiques ; effectuer une première vérification consistant à vérifier si ledit débit effectif mesuré est supérieur à la somme d'une bande passante préalablement réservée pour ledit flux de données critiques et d'une bande passante de tolérance, la première vérification servant de déclencheur d'ajustement de la bande passante réservée pour ledit flux ; effectuer une seconde vérification consistant à vérifier si ledit débit effectif mesuré est inférieur à la bande passante préalablement réservée pour ledit flux de données critiques, à laquelle est retranchée la somme d'une bande passante de marge et d'une bande passante de tolérance ; et en cas de première vérification positive ou de seconde vérification positive, ajuster la réservation de bande passante pour ledit flux de données critiques à une valeur égale à la somme du débit effectif mesuré pour ledit flux de données critiques et de la bande passante de marge. Ainsi, la gestion de la réservation de bande passante pour les flux de données transitant entre le premier réseau de communication et le second réseau de communication interconnectés via un dispositif d'interconnexion est améliorée.

Selon un mode de réalisation particulier, la réservation de bande passante pour ledit flux de données critiques est ajustée dans la limite d'une borne maximale associée audit flux de données critiques. Ainsi, il est assuré que la réservation de bande passante pour ledit flux de données reste dans une limite acceptable vis-à-vis des autres flux de données qui transitent via ledit dispositif d'interconnexion.

Selon un mode de réalisation particulier, ledit dispositif d'interconnexion active ledit mécanisme de surveillance, pour l'ensemble desdits flux de données critiques transitant entre les premier et second réseaux de communication via ledit dispositif d'interconnexion, de manière périodique. Ainsi, moins de ressources de traitement sont utilisées par le mécanisme de surveillance.

Selon un mode de réalisation particulier, ledit dispositif d'interconnexion définit dynamiquement, pour chaque flux de données critiques transitant entre les premier et second réseaux de communication via ledit dispositif d'interconnexion, une période de temps entre deux activations successives du mécanisme de surveillance en effectuant les étapes suivantes : vérifier si un critère de stabilité du débit effectif dudit flux de données critiques est respecté ; en cas de vérification positive vis-à-vis dudit critère de stabilité, allonger la période de temps entre deux activations successives du mécanisme de surveillance pour ledit flux de données critiques ; et en cas de vérification négative vis-à-vis dudit critère de stabilité, réduire la période de temps entre deux activations successives du mécanisme de surveillance pour ledit flux de données critiques. Ainsi, un compromis entre réduction de consommation de ressources de traitement et réactivité du mécanisme de surveillance est trouvé.

Selon un mode de réalisation particulier, en cas de vérification négative vis-à-vis dudit critère de stabilité, ladite période de temps entre deux activations successives du mécanisme de surveillance pour ledit flux de données critiques est réinitialisée à une valeur de borne minimum prédéfinie. Ainsi, la réactivité du mécanisme de surveillance est renforcée.

Selon un mode de réalisation particulier, ledit critère de stabilité est respecté lorsque chaque mesure de débit effectif dudit flux de données critiques lors des N dernières exécutions, N ≥ 1, sont inférieures à la bande passante réservée, dans la mesure où ladite bande passante réservée n'a pas été ajustée lors desdites N précédentes exécutions du mécanisme de surveillance pour ledit flux de données critiques. Ainsi, tant que la réservation de bande passante est adéquate, la réduction de consommation de ressources de traitement est accrue.

Selon un mode de réalisation particulier, ledit critère de stabilité est respecté lorsque ladite bande passante réservée n'a pas été ajustée lors desdites N dernières exécutions, N ≥ 1, du mécanisme de surveillance pour ledit flux de données critiques. Ainsi, la vérification du critère de stabilité est simple.

L'invention concerne également un dispositif d'interconnexion entre un premier réseau de communication et un second réseau de communication, des flux de données critiques et des flux de données non critiques transitant entre les premier et second réseaux de communication via ledit dispositif d'interconnexion, les flux de données critiques ayant contrairement aux flux de données non critiques un besoin de réservation de bande passante pour assurer des contraintes de débit et de latence. Le dispositif d'interconnexion implémente un mécanisme de surveillance des flux de données critiques transitant entre les premier et second réseaux de communication via ledit dispositif d'interconnexion de telle sorte que, pour chaque flux de données critiques transitant entre les premier et second réseaux de communication via ledit dispositif d'interconnexion, le dispositif d'interconnexion implémente : des moyens pour mesurer un débit effectif dudit flux de données critiques ; des moyens pour effectuer une première vérification consistant à vérifier si ledit débit effectif mesuré est supérieur à la somme d'une bande passante préalablement réservée pour ledit flux de données critiques et d'une bande passante de tolérance, la première vérification servant de déclencheur d'ajustement de réservation de bande passante réservée pour ledit flux ; des moyens pour effectuer une seconde vérification consistant vérifier si ledit débit effectif mesuré est inférieur à la bande passante préalablement réservée pour ledit flux de données critiques, à laquelle est retranchée la somme d'une bande passante de marge et d'une bande passante de tolérance ; et des moyens pour, en cas de première vérification positive ou de seconde vérification positive, ajuster la réservation de bande passante pour ledit flux de données critiques à une valeur égale à la somme du débit effectif mesuré pour ledit flux de données critiques et de la bande passante de marge.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus selon l'une quelconque de ses variantes, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans lequel la présente invention peut être mise en œuvre ;
- la Fig. 2 illustre schématiquement un exemple d'architecture matérielle d'un dispositif d'interconnexion de premier et second réseaux de communication du système de communication de la Fig. 1 ;
- la Fig. 3 illustre schématiquement un algorithme, implémenté par le dispositif d'interconnexion, pour gérer dynamiquement des réservations de bande passante pour des flux de données transitant entre les premier et second réseaux de communication via ledit dispositif d'interconnexion ;
- la Fig. 4 illustre schématiquement un algorithme, implémenté par le dispositif d'interconnexion, pour gérer dynamiquement lesdites réservations de bande passante, dans un mode de réalisation particulier de la présente invention ;
- la Fig. 5 illustre schématiquement une réservation de bande passante suite à l'exécution de l'algorithme de la Fig. 3 ou de l'algorithme de la Fig. 4 ; et
- la Fig. 6 illustre schématiquement un algorithme, implémenté par le dispositif d'interconnexion, pour définir la durée d'une période entre deux activations successives d'un mécanisme de surveillance de débit effectif vis-à-vis de chaque dit flux de données.

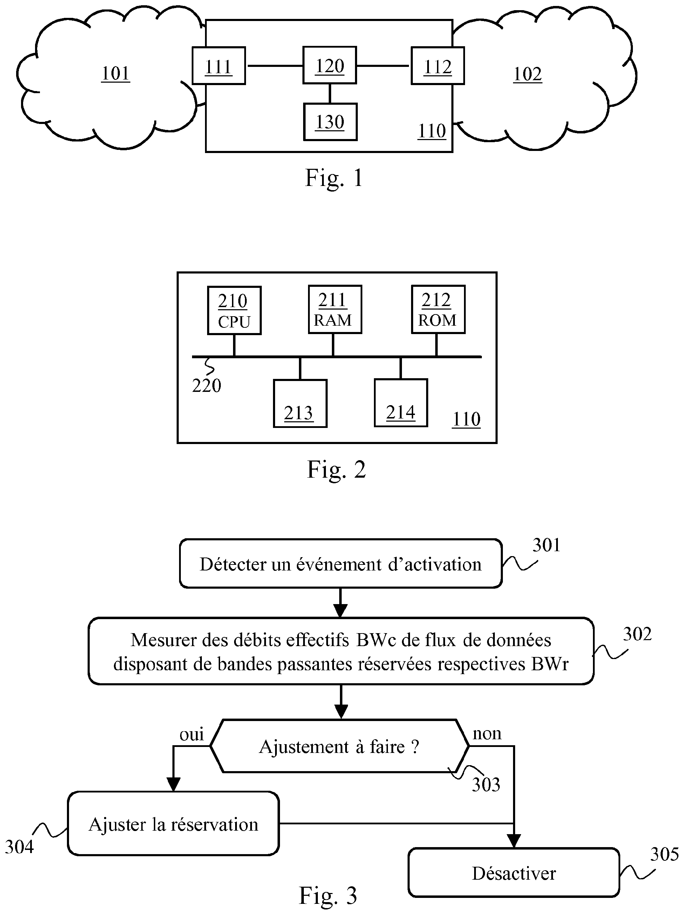

La Fig. 1 illustre schématiquement un système de communication dans lequel la présente invention peut être mise en œuvre. Le système de communication de la Fig. 1 comporte un premier réseau de communication 101 et un second réseau de communication 102 interconnectés par un dispositif d'interconnexion 110. Chacun des premier 101 et second 102 réseaux de communication comporte au moins un dispositif de communication (non représentés). Des échanges sous forme de flux de données peuvent ainsi être établis entre dispositifs de communication du premier réseau de communication 101. Des échanges sous forme de flux de données peuvent ainsi être établis entre dispositifs de communication du second réseau de communication 102. Enfin, des échanges sous forme de flux de données peuvent ainsi être établis entre dispositifs de communication du premier réseau de communication 101 et des dispositifs de communication du second réseau de communication 102, et dans ce cas, via le dispositif d'interconnexion 110. L'invention s'attache particulièrement à la gestion de réservation de bande passante de ces flux de données transitant via le dispositif d'interconnexion 110.

On entend par « réservation de bande » une réservation de bande passante au sein du premier réseau de communication 101 et/ou une réservation de bande passante au sein du second réseau de communication 102 et/ou une réservation de bande passante au sein du dispositif d'interconnexion 110 (partage de mémoires tampon (« buffer » en anglais)). Il faut comprendre que cette réservation de bande passante est une indication pour une bonne gestion du contrôle d'admission, à savoir accepter ou refuser de nouveaux flux de données au vu d'un état actuel d'occupation des ressources, sachant que les flux de données critiques peuvent dépasser les réservations faites, au risque de perturber le fonctionnement du système de communication, puisque, si de nouveaux flux de données sont acceptés au vu de la réservation actuelle de bande passante alors que les flux de données existants consomment plus de bande passante que celle réservée, cela peut entraîner une surcharge du réseau, des pertes de paquets et ainsi provoquer une dégradation de service.

Dans un mode de réalisation particulier, le premier réseau de communication 101 est de type LAN ou WLAN, et le second réseau de communication 102 est de type WAN, et le dispositif d'interconnexion 110 est une passerelle résidentielle. Le dispositif d'interconnexion 110 peut interconnecter d'autres types de réseaux de communication, comme par exemple un réseau LAN et un réseau WLAN.

Les flux de données transitant au sein du premier réseau de communication 101, comme ceux transitant au sein du second réseau de communication 102, et comme ceux transitant entre le premier réseau de communication 101 et le second réseau de communication 102 via le dispositif d'interconnexion 110, peuvent être de différents types, en fonction des applications auxquels lesdits flux de données sont issus et/ou destinés. En effet, certains flux de données doivent respecter des contraintes de latence de transmission et de débit, et sont donc critiques en termes de gestion de bande passante qui leur est réservée. Le non respect de ces contraintes entraîne typiquement des pertes de paquets. D'autres flux de données n'ont pas de telles contraintes de latence et de débit, et peuvent par conséquent se passer de réservation de bande passante. Ces autres flux de données sont alors transmis au plus vite selon la bande passante effectivement laissée libre par les flux pour lesquels de la bande passante a été réservée, en évitant les pertes de paquets. Une inspection des paquets en profondeur DPI (« Deep Packet Inspection » en anglais) des flux de données permet de déterminer, notamment en fonction des protocoles de transport utilisés, quels sont les types respectifs desdits flux de données.

Les flux de données transitant entre le premier réseau de communication 101 et le second réseau de communication 102 via le dispositif d'interconnexion 110 sont préférentiellement au format IP.

Lorsque le dispositif d'interconnexion 110 est une passerelle résidentielle, il y a coexistence de trois services : un service de voix sur IP (« VoIP » pour « Voice over IP » en anglais), qui est considéré comme critique vis-à-vis de contraintes de latence et de débit à respecter pour le bon fonctionnement du service ; un service de télévision TV sur IP, qui est aussi considéré comme critique vis-à-vis de contraintes de latence et de débit à respecter pour le bon fonctionnement du service ; et un service de données (« Data » en anglais), qui est considéré comme non critique, car sans contraintes de latence et de débit.

Comme détaillé par la suite, le dispositif d'interconnexion 110 est adapté pour surveiller les différents flux de données transitant entre une première interface 111 dudit dispositif d'interconnexion 110, via laquelle ledit dispositif d'interconnexion 110 est connecté au premier réseau de communication 101, et une seconde interface 112 dispositif d'interconnexion 110, via laquelle ledit dispositif d'interconnexion 110 est connecté au second réseau de communication 102. Cette surveillance consiste à déterminer, pour les flux de données critiques, les débits effectifs respectifs desdits flux de données, et de vérifier l'adéquation des bandes passantes respectives réservées pour lesdits flux de données, et d'ajuster éventuellement les réservations de bandes passantes, en temps-réel. Pour ce faire, le dispositif d'interconnexion 110 dispose d'une unité d'inspection de paquets en profondeur DPI 120 placée sur le chemin de données entre les première 111 et seconde 112 interfaces. L'unité d'inspection de paquets en profondeur DPI 120 est en outre connectée à une unité de contrôle 130 du dispositif d'interconnexion 110, en charge notamment de gérer dynamiquement les réservations de bande passante pour les flux de données critiques. Le comportement du dispositif d'interconnexion 110, et plus particulièrement de l'unité de contrôle 130, vis-à-vis des réservations de bande passante est décrit ci-après en relation avec les Figs. 3, 4 et 6.

La Fig. 2 illustrent schématiquement un exemple d'architecture matérielle du dispositif d'interconnexion 110.

Selon cet exemple d'architecture matérielle, le dispositif d'interconnexion 110 comporte, reliés par un bus de communication 220 : un processeur ou CPU (« Central Processing Unit » en anglais) 210 ; une mémoire vive RAM (« Random Access Memory» en anglais) 211 ; une mémoire morte ROM (« Read Only Memory » en anglais) 212 ; une unité de stockage 213 ou un lecteur de support de stockage, tel qu'un disque dur HDD (« Hard Disk Drive » en anglais) ou un lecteur de cartes SD (« Secure Digital » en anglais) ; et un ensemble d'interfaces 214 permettant audit dispositif de communication d'être connecté aux premier 101 et second 102 réseaux de communication (à savoir respectivement les première 111 et seconde 112 interfaces de la représentation schématique de la Fig. 1).

Le processeur 210 est capable d'exécuter des instructions chargées dans la RAM 211 à partir de la ROM 212, d'une mémoire externe (non représentée), d'un support de stockage, ou d'un réseau de communication. Lorsque le dispositif d'interconnexion 110 est mis sous tension, le processeur 210 est capable de lire de la RAM 211 des instructions et de les exécuter. Ces instructions forment un programme d'ordinateur causant la mise en œuvre, par le processeur 210, de tout ou partie des algorithmes et étapes décrits ci-après.

Ainsi, tout ou partie des algorithmes et étapes décrits ci-après (et donc les unités, du dispositif d'interconnexion 110, mentionnées en regard de la Fig. 1) peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un algorithme, implémenté par le dispositif d'interconnexion 110, pour gérer dynamiquement des réservations de bande passante pour des flux de données transitant entre les premier 101 et second 102 réseaux de communication via ledit dispositif d'interconnexion 110.

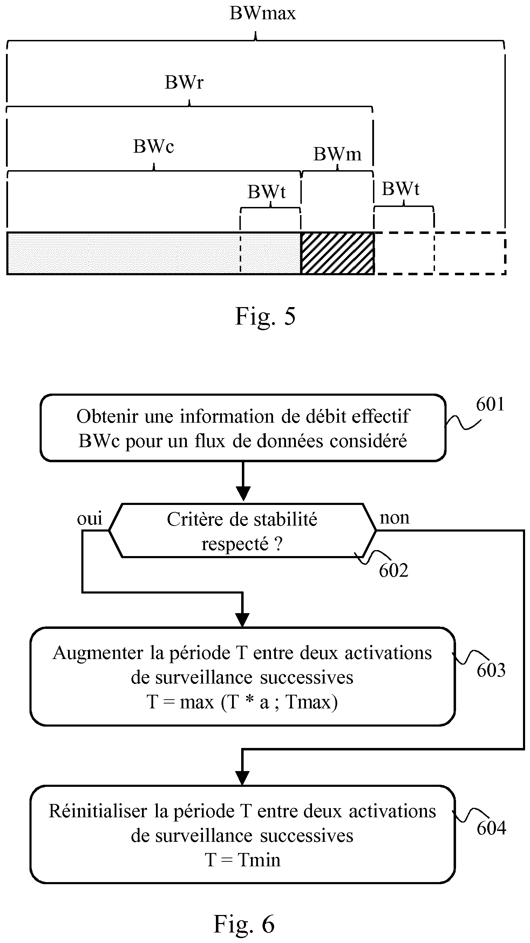

Dans une étape 301, le dispositif d'interconnexion 110 détecte un événement d'activation d'un mécanisme de surveillance des flux de données transitant entre les premier 101 et second 102 réseaux de communication via ledit dispositif d'interconnexion 110. Selon un premier mode de réalisation, le mécanisme de surveillance desdits flux de données est activé périodiquement. Selon un second mode de réalisation particulier, le mécanisme de surveillance desdits flux de données est activé en s'appuyant sur une période de temps entre deux activations successives, dont la durée est ajustée dynamiquement, comme détaillé par la suite en relation avec la Fig. 6.

Dans une étape 302 suivante, le dispositif d'interconnexion 110 effectue des mesures de débit effectif de chacun des flux de données critiques qui transitent entre les premier 101 et second 102 réseaux de communication via ledit dispositif d'interconnexion 110.

Le dispositif d'interconnexion 110 peut être informé des flux de données critiques, qui transitent entre les premier 101 et second 102 réseaux de communication via ledit dispositif d'interconnexion 110, à prendre en compte, par configuration préalable, *e.g.* grâce à des informations saisies par un utilisateur via une interface utilisateur de contrôle dudit dispositif d'interconnexion 110. En variante, le dispositif d'interconnexion 110 peut être informé des flux de données critiques, qui transitent entre les premier 101 et second 102 réseaux de communication via ledit dispositif d'interconnexion 110, à prendre en compte, en analysant des échanges de messages qui transitent entre les premier 101 et second 102 réseaux de communication via ledit dispositif d'interconnexion 110 pour établir lesdits flux de données critiques. En effet, de tels flux de données critiques reposent typiquement sur un protocole préalable de mise en relation et de configuration des dispositifs terminaux concernés. Analyser lesdits messages par inspection de paquets en profondeur DPI permet d'identifier les flux de données critiques subséquents. Une procédure similaire est aussi typiquement implémentée pour mettre fin aux flux de données. Encore en variante, le dispositif d'interconnexion 110 peut être informé des flux de données critiques, qui transitent entre les premier 101 et second 102 réseaux de communication via ledit dispositif d'interconnexion 110, à prendre en compte, en analysant directement les flux de données qui transitent entre les premier 101 et second 102 réseaux de communication via ledit dispositif d'interconnexion 110. Analyser lesdits flux de données par inspection de paquets en profondeur DPI permet de discriminer les flux de données critiques des autres flux de données (non critiques). C'est cette dernière approche qui est utilisée, de manière illustrative, par la suite.

Pour effectuer les mesures de débit effectif de chacun des flux de données critiques, le dispositif d'interconnexion 110 doit être apte à discriminer les flux de données critiques parmi l'ensemble des flux de données qui transitent via le dispositif d'interconnexion 110. Ceci est fait par inspection des paquets en profondeur DPI qui transitent via le dispositif d'interconnexion 110. Dans ce cas, l'analyse est moins coûteuse en termes de ressources de traitement que pour découvrir des flux de données critiques non précédemment identifiés, car il peut suffire ici de récupérer des adresses IP source et destination, ainsi que des ports source et destination, pour identifier le flux de données en question.

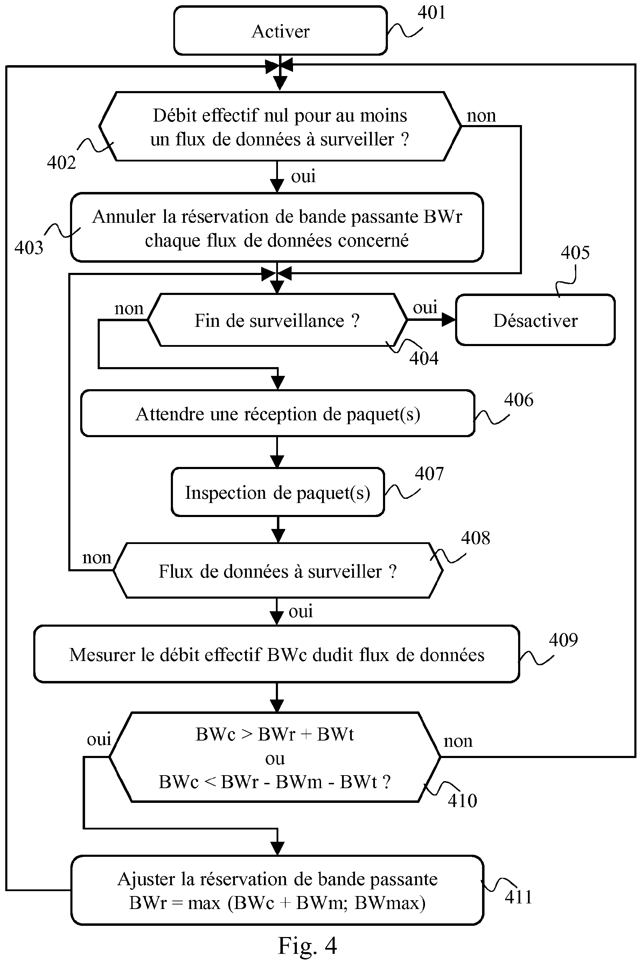

Dans une étape 303 suivante, le dispositif d'interconnexion 110 vérifie si un ajustement de réservation de bande passante doit être effectué vis-à-vis d'au moins un desdits flux de données critiques. Lorsque de la bande passante a été préalablement réservée pour le flux de données critiques considéré, le dispositif d'interconnexion 110 vérifie si la réservation de bande passante est toujours adéquate, voire encore nécessaire, en fonction du débit effectif mesuré pour ledit flux de données critiques. Lorsqu'aucune bande passante n'a été préalablement réservée pour le flux de données critiques considéré, le dispositif d'interconnexion 110 doit effectuer la réservation de bande passante en fonction du débit effectif mesuré pour ledit flux de données critiques. Comme détaillé par la suite en relation avec la Fig. 4 dans un mode de réalisation particulier, le dispositif d'interconnexion 110 vérifie si le débit effectif mesuré pour ledit flux de données critiques (noté BWc) est supérieur à la somme de la bande passante préalablement réservée (notée BWr) pour ledit flux de données critiques et d'une bande passante de tolérance (notée BWt) ; si tel est le cas, un ajustement de réservation de bande passante (augmentation) doit être fait pour ledit flux de donnée critiques, et une étape 304 est effectuée. De plus, le dispositif d'interconnexion 110 vérifie si le débit effectif (noté donc BWc) mesuré pour ledit flux de données critiques est inférieur à la bande passante préalablement réservée (notée donc BWr) pour ledit flux de données critiques à laquelle est retranchée la somme d'une bande passante de marge (notée BWm) et de la bande passante de tolérance (notée donc BWt) ; si tel est le cas, un ajustement de réservation de bande passante (réduction) doit être fait pour ledit flux de données critiques, et l'étape 304 est effectuée. Dans tout autre cas, aucun ajustement de bande passante n'est nécessaire, et une étape 305 est effectuée, dans laquelle le mécanisme de surveillance des flux de données transitant entre les premier 101 et second 102 réseaux de communication via ledit dispositif d'interconnexion 110 est désactivé.

La bande passante de marge BWm sert à se prémunir de variations sporadiques à la hausse du débit effectif BWc du flux de données critiques considéré. La bande passante de marge BWm peut être prédéfinie, par exemple en fonction du type de service auquel le flux de données critiques est rattaché. La bande passante de marge BWm peut aussi être un pourcentage prédéfini du débit effectif BWc dudit flux de données critiques.

La bande passante de tolérance BWt sert de déclencheur d'ajustement de la bande passante réservée pour ledit flux de données critiques considéré. La bande passante de tolérance BWt peut être prédéfinie, par exemple en fonction du type de service auquel le flux de données critiques est rattaché. La bande passante de tolérance BWt peut aussi être un pourcentage prédéfini du débit effectif BWc dudit flux de données critiques.

Dans l'étape 304, le dispositif d'interconnexion 110 procède à un ajustement de réservation de bande passante pour chacun des flux de données critiques pour lesquels la mesure de débit effectif effectuée à l'étape 302 a montré que la réservation de bande passante précédente n'est plus adéquate. Comme détaillé par la suite en relation avec la Fig. 4 dans un mode de réalisation particulier, le dispositif d'interconnexion 110 effectue une réservation de bande passante égale à la somme du débit effectif (noté donc BWc) mesuré pour ledit flux de données critiques et de la bande passante de marge (notée BWm), à moins que le flux de données critiques pour lequel une réservation de bande passante avait préalablement été faite n'existe plus, auquel cas le dispositif d'interconnexion 110 libère la bande passante réservée jusqu'alors audit flux de données critiques. Puis l'étape 305 est effectuée.

La Fig. 4 illustre schématiquement un algorithme, implémenté par le dispositif d'interconnexion 110, pour gérer dynamiquement les réservations de bande passante pour les flux de données critiques transitant via ledit dispositif d'interconnexion 110, dans un mode de réalisation particulier de la présente invention.

Dans une étape 401, le dispositif d'interconnexion 110 active le mécanisme de surveillance des flux de données transitant entre les premier 101 et second 102 réseaux de communication via ledit dispositif d'interconnexion 110. Cette étape est typiquement déclenchée comme l'étape 301 précédemment décrite.

Dans une étape 402 suivante, le dispositif d'interconnexion 110 vérifie si au moins un flux de données critique, donc à surveiller, a un débit effectif nul. Par exemple, une telle information peut avoir été fournie au mécanisme de surveillance suite à la détection, par inspection de paquets en profondeur DPI, que des messages de clôture dudit flux de données critiques ont été échangés entre un dispositif du premier réseau de communication 101 et un dispositif du second réseau de communication 102. Sinon, comme apparent par la suite, l'algorithme de la Fig. 4 comporte typiquement une pluralité de boucles, et cette étape 402 permet de gérer les flux de données critiques qui ont disparus en cours de surveillance. Si au moins un flux de données critique a un débit effectif nul, une étape 403 est effectuée ; sinon, une étape 404 est effectuée.

Dans l'étape 403, le dispositif d'interconnexion 110 annule la réservation de bande passante BWr qui avait été préalablement faite pour chaque flux de données critiques ayant un débit effectif BWc nul. Dans un mode de réalisation préféré, une réservation de bande passante minimale égale à la bande passante de marge BWm est conservée pour chaque flux de données critiques susceptible de transiter via le dispositif d'interconnexion 110. Cela permet d'assurer que l'intégralité de la bande passante ne soit pas consommée par des flux de données non critiques, ce qui pourrait empêcher une prise en charge correcte de flux de données critiques activés ou réactivés ultérieurement. En d'autres termes, le dispositif d'interconnexion 110 libère, dans la limite définie par les spécifications système, la bande passante BWr qui avait été préalablement réservée pour chaque flux de données critiques ayant un débit effectif BWc nul. Puis, l'étape 404 est effectuée.

Dans l'étape 404, le dispositif d'interconnexion 110 vérifie si la surveillance est terminée. En effet, le mécanisme de surveillance n'est préférentiellement pas activé en permanence, de manière à limiter la consommation de ressources de traitement du dispositif d'interconnexion 110. La surveillance est donc typiquement activée par intermittence pendant des périodes de temps du durée prédéfinie. Si la surveillance est terminée, une étape 405 est effectuée dans laquelle le mécanisme de surveillance des flux de données transitant entre les premier 101 et second 102 réseaux de communication via ledit dispositif d'interconnexion 110 est désactivé, comme pour l'étape 305 ; sinon, une étape 406 est effectuée.

Dans l'étape 406, le dispositif d'interconnexion 110 attend une réception de paquet(s) via l'un ou l'autre des premier 101 et second 102 réseaux de communication. Un mécanisme de chien de garde (« watchdog » en anglais) peut être implémenté pour éviter que l'algorithme de la Fig. 4 bloque dans cette étape, ce qui signifierait que plus aucun flux de données critique ne transite via le dispositif d'interconnexion 110.

Dans une étape 407 suivante, le dispositif d'interconnexion 110 effectue une inspection de paquets en profondeur DPI de manière à identifier à quel flux de données appartient le(s) paquet(s) de données reçu(s), et plus particulièrement si le(s) paquet(s) de données reçu(s) appartien(nen)t à un flux de données critiques.

Dans une étape 408 suivante, le dispositif d'interconnexion 110 vérifie si le(s) paquet(s) de données reçu(s) appartien(nen)t à un flux de données critiques, et donc à un flux de données à surveiller. Si tel est le cas, une étape 409 est effectuée ; sinon, l'étape 404 est réitérée.

Dans l'étape 409, le dispositif d'interconnexion 110 mesure le débit effectif BWc dudit flux de données critiques auquel appartien(nen)t le(s) paquet(s) de données reçu(s).

Dans une étape 410 suivante, le dispositif d'interconnexion 110 vérifie si la bande passante préalablement réservée BWr, pour ledit flux de données critiques, est toujours adéquate vis-à-vis du débit effectif BWc dudit flux de données critiques. Le dispositif d'interconnexion 110 vérifie si le débit effectif mesuré BWc pour ledit flux de données critiques est supérieur à la somme de la bande passante préalablement réservée BWr pour ledit flux de données critiques et de la bande passante de tolérance BWt ; si tel est le cas, un ajustement de réservation de bande passante (augmentation) doit être fait pour ledit flux de données critiques, et une étape 411 est effectuée. De plus, le dispositif d'interconnexion 110 vérifie si le débit effectif BWc mesuré pour ledit flux de données critiques BWc est inférieur à la bande passante préalablement réservée BWr pour ledit flux de données critiques à laquelle est retranchée la somme de la bande passante de marge BWm et de la bande passante de tolérance BWt ; si tel est le cas, un ajustement de réservation de bande passante (réduction) doit être fait pour ledit flux de données, et l'étape 411 est effectuée. Dans tout autre cas, aucun ajustement n'est nécessaire vis-à-vis dudit flux de données critiques, et l'étape 402 est réitérée.

Dans l'étape 411, le dispositif d'interconnexion 110 procède à un ajustement de réservation de bande passante pour chacun des flux de données critiques pour lesquels la mesure de débit effectif effectuée à l'étape 409 a montré que la réservation de bande passante précédente n'est plus adéquate. Le dispositif d'interconnexion 110 effectue alors une réservation de bande passante égale à la somme du débit effectif BWc mesuré pour ledit flux de données critiques et de la bande passante de marge BWm, préférentiellement dans la limite d'une borne maximum BWmax prédéfinie pour ledit flux de données critiques. La borne maximum BWmax prédéfinie est par exemple prédéfinie en fonction du type de service (e.g. VoIP, TV, Data) auquel est associé ledit flux de données critiques. Puis l'étape 402 est réitérée.

Il convient de noter que, si un flux de données critique est connu par le dispositif d'interconnexion 110 préalablement à son transit via le dispositif d'interconnexion 110 (*e.g.* par configuration ou par analyse de messages protocolaires préalables), alors la réservation de bande passante initiale pour ledit flux de données critiques peut être égale à la somme d'un débit prévu BWp pour ledit flux de données critiques (e.g. tel qu'apparent dans ladite configuration ou dans lesdits messages protocolaires préalables), et de la bande passante de marge BWm, préférentiellement dans la limite de la borne maximum BWmax prédéfinie pour ledit flux de données critiques.

La Fig. 5 illustre schématiquement une réservation de bande passante suite à l'exécution de l'algorithme de la Fig. 3 ou de l'algorithme de la Fig. 4.

Sur la représentation schématique de la Fig. 5 apparaît le débit effectif BWc mesuré pour ledit flux de données critiques. La bande passante réservée BWr pour ledit flux de données critiques est donc la somme du débit effectif BWc plus la bande passante de marge BWm. La bande passante de marge BWm apparaît en hachures sur la représentation de la Fig. 5. La bande passante de marge BWm apparaît de chaque côté de la bande passante de marge BWm : deux seuils sont ainsi définis, un seuil minimum (BWr - BWm - BWt) en dessous duquel une prochaine mesure du débit effectif dudit flux de données critiques entraînera une réduction de réservation de bande passante, et un seuil maximum (BWr + BWt) au delà duquel une prochaine mesure du débit effectif dudit flux de données critiques entraînera une augmentation de réservation de bande passante.

Les algorithmes des Figs. 3 et 4 ont été décrits dans le cadre d'une surveillance commune à l'ensemble des flux de données critiques qui transitent entre les premier 101 et second 102 réseaux de communication via le dispositif d'interconnexion 110. Un tel mécanisme de surveillance peut toutefois être implémenté indépendamment pour chaque flux de données critiques à surveiller (l'étape 408 de l'algorithme de la Fig. 4 étant alors omise). Dans ce cas, la fréquence à laquelle le mécanisme de surveillance est activé peut être ajustée de manière indépendante pour chaque flux de données critiques qui transite entre les premier 10 et second 102 réseaux de communication via le dispositif d'interconnexion 110.

La Fig. 6 illustre schématiquement un algorithme, implémenté par le dispositif d'interconnexion 110, pour définir la durée d'une période T entre deux activations successives du mécanisme de surveillance pour un flux de données critiques qui transite via ledit dispositif d'interconnexion 110. L'algorithme de la Fig. 6 est préférentiellement exécuté à la fin de l'exécution de l'algorithme de la Fig. 3 ou de celui de la Fig. 4.

Dans une étape 601, le dispositif d'interconnexion 110 obtient une information de débit effectif BWc dudit flux de données critiques. Cette information résulte de la mesure effectuée à l'étape 302 ou à l'étape 409, au moins lors de la précédente exécution du mécanisme de surveillance (*i.e.* de l'algorithme de la Fig. 3 ou de celui de la Fig. 4).

Dans une étape 602 suivante, le dispositif d'interconnexion 110 vérifie si un critère de stabilité du débit effectif BWc dudit flux de données critiques est respecté. Selon un mode de réalisation particulier, ledit critère de stabilité est respecté lorsque chaque mesure de débit effectif BWc dudit flux de données critiques lors des N dernières exécutions (N ≥ 1) sont inférieures à la bande passante réservée BWr et supérieures à la bande passante réservée BWr à laquelle est retranchée la bande passante de marge BWm (BWr - BWm), dans la mesure où ladite bande passante réservée BWr n'a pas été ajustée lors desdites N précédentes exécutions du mécanisme de surveillance (*i.e.* de l'algorithme de la Fig. 3 ou de celui de la Fig. 4) pour ledit flux de données critiques. Selon un autre mode de réalisation particulier, ledit critère de stabilité est respecté lorsque ladite bande passante réservée BWr n'a pas été ajustée lors desdites N dernières exécutions du mécanisme de surveillance (*i.e.* de l'algorithme de la Fig. 3 ou de celui de la Fig. 4) pour ledit flux de données critiques. Dans le cas où le critère de stabilité du débit effectif BWc dudit flux de données critiques est respecté, une étape 503 est effectuée ; sinon, une étape 504 est effectuée.

Dans l'étape 503, la période T entre deux activations successives du mécanisme de surveillance pour ledit flux de données critiques est augmentée, dans la limite d'une borne maximum Tmax prédéfinie. Ladite période T peut être augmentée d'un pas d'incrément prédéfini, dans la limite de ladite borne maximum Tmax prédéfinie. Dans un mode de réalisation préférentiel, ladite période T est augmentée d'un certain pourcentage (facteur « *a* ») de la valeur de ladite période T avant augmentation, dans la limite de la borne maximum Tmax prédéfinie. Par exemple, ladite période T est doublée.

Dans l'étape 503, la période T entre deux activations successives du mécanisme de surveillance pour ledit flux de données critiques est diminuée. Ladite période T peut être diminuée d'un pas de décrément prédéfini, dans la limite d'une borne minimum Tmin prédéfinie. Dans un mode de réalisation préférentiel, ladite période T est réinitialisée à la valeur de la borne minimum Tmin prédéfinie.

Au moment où un nouveau flux de données critiques à surveiller est détecté par le dispositif d'interconnexion 110, la période T entre deux activations successives du mécanisme de surveillance pour ledit flux de données critiques est préférentiellement fixée à la valeur de la borne minimum Tmin prédéfinie, mais pourrait aussi l'être à la valeur de la borne maximum Tmax prédéfinie (en partant du principe que le flux de données critiques ne va pas significativement changer en termes de débit alors que ledit flux de données critiques vient d'être établi) ou à une valeur intermédiaire entre la borne minimum Tmin prédéfinie et la borne maximum Tmax prédéfinie.

## Revendications

1. Procédé de gestion de bande passante implémenté par un dispositif d'interconnexion (110) entre un premier réseau de communication (101) et un second réseau de communication (102), des flux de données critiques et des flux de données non critiques transitant entre les premier et second réseaux de communication via ledit dispositif d'interconnexion, les flux de données critiques ayant contrairement aux flux de données non critiques un besoin de réservation de bande passante pour assurer des contraintes de débit et de latence,
**caractérisé en ce que** le dispositif d'interconnexion implémente un mécanisme de surveillance des flux de données critiques transitant entre les premier et second réseaux de communication via ledit dispositif d'interconnexion de telle sorte que, pour chaque flux de données critiques transitant entre les premier et second réseaux de communication via ledit dispositif d'interconnexion, le dispositif d'interconnexion effectue les étapes suivantes :
- mesurer (302 ; 409) un débit effectif dudit flux de données critiques ;
- effectuer (303 ; 410) une première vérification consistant à vérifier si ledit débit effectif mesuré est supérieur à la somme d'une bande passante préalablement réservée pour ledit flux de données critiques et d'une bande passante de tolérance, la première vérification servant de déclencheur d'ajustement de réservation de bande passante réservée pour ledit flux ;
- effectuer (303 ; 410) une seconde vérification consistant à vérifier si ledit débit effectif mesuré est inférieur à la bande passante préalablement réservée pour ledit flux de données critiques, à laquelle est retranchée la somme d'une bande passante de marge et de la bande passante de tolérance ; et
- en cas de première vérification positive ou de seconde vérification positive, ajuster (304 ; 411) la réservation de bande passante pour ledit flux de données critiques à une valeur égale à la somme du débit effectif mesuré pour ledit flux de données critiques et de la bande passante de marge.

2. Procédé selon la revendication 1, **caractérisé en ce que** la réservation de bande passante pour ledit flux de données critiques est ajustée dans la limite d'une borne maximale associée audit flux de données critiques.

3. Procédé selon l'une quelconque des revendications 1 et 2, **caractérisé en ce que** ledit dispositif d'interconnexion active ledit mécanisme de surveillance, pour l'ensemble desdits flux de données critiques transitant entre les premier et second réseaux de communication via ledit dispositif d'interconnexion, de manière périodique.

4. Procédé selon l'une quelconque des revendications 1 et 2, **caractérisé en ce que** ledit dispositif d'interconnexion définit dynamiquement, pour chaque flux de données critiques transitant entre les premier et second réseaux de communication via ledit dispositif d'interconnexion, une période de temps entre deux activations successives du mécanisme de surveillance en effectuant les étapes suivantes :
- vérifier (602) si un critère de stabilité du débit effectif dudit flux de données critiques est respecté ;
- en cas de vérification positive vis-à-vis dudit critère de stabilité, allonger (603) la période de temps entre deux activations successives du mécanisme de surveillance pour ledit flux de données critiques ; et
- en cas de vérification négative vis-à-vis dudit critère de stabilité, réduire (604) de la période de temps entre deux activations successives du mécanisme de surveillance pour ledit flux de données critiques.

5. Procédé selon la revendication 4, **caractérisé en ce que**, en cas de vérification négative vis-à-vis dudit critère de stabilité, ladite période de temps entre deux activations successives du mécanisme de surveillance pour ledit flux de données critiques est réinitialisée (604) à une valeur de borne minimum prédéfinie.

6. Procédé selon l'une quelconque des revendications 4 et 5, **caractérisé en ce que** ledit critère de stabilité est respecté lorsque chaque mesure de débit effectif dudit flux de données critiques lors des N dernières exécutions, N ≥ 1, sont inférieures à la bande passante réservée, dans la mesure où ladite bande passante réservée n'a pas été ajustée lors desdites N précédentes exécutions du mécanisme de surveillance pour ledit flux de données critiques.

7. Procédé selon l'une quelconque des revendications 4 et 5, **caractérisé en ce que** ledit critère de stabilité est respecté lorsque ladite bande passante réservée n'a pas été ajustée lors desdites N dernières exécutions, N ≥ 1, du mécanisme de surveillance pour ledit flux de données critiques.

8. Programme d'ordinateur, **caractérisé en ce qu'**il comprend des instructions pour mettre en œuvre, par un processeur d'un dispositif d'interconnexion entre un premier réseau de communication et un second réseau de communication, le procédé selon l'une quelconque des revendications 1 à 7, lorsque ledit programme est exécuté par ledit processeur.

9. Moyens de stockage, **caractérisés en ce qu'**ils stockent un programme d'ordinateur comprenant des instructions pour mettre en œuvre, par un processeur d'un dispositif d'interconnexion entre un premier réseau de communication et un second réseau de communication, le procédé selon l'une quelconque des revendications 1 à 7, lorsque ledit programme est exécuté par ledit processeur.

10. Dispositif d'interconnexion (110) entre un premier réseau de communication (101) et un second réseau de communication (102), des flux de données critiques et des flux de données non critiques transitant entre les premier et second réseaux de communication via ledit dispositif d'interconnexion, les flux de données critiques ayant contrairement aux flux de données non critiques un besoin de réservation de bande passante pour assurer des contraintes de débit et de latence,
**caractérisé en ce que** le dispositif d'interconnexion implémente un mécanisme de surveillance des flux de données critiques transitant entre les premier et second réseaux de communication via ledit dispositif d'interconnexion de telle sorte que, pour chaque flux de données critiques transitant entre les premier et second réseaux de communication via ledit dispositif d'interconnexion, le dispositif d'interconnexion implémente :
- des moyens pour mesurer (302 ; 409) un débit effectif dudit flux de données critiques ;
- des moyens pour effectuer (303 ; 410) une première vérification consistant à vérifier si ledit débit effectif mesuré est supérieur à la somme d'une bande passante préalablement réservée pour ledit flux de données critiques et d'une bande passante de tolérance, la première vérification servant de déclencheur d'ajustement de réservation de bande passante réservée pour ledit flux ;
- des moyens pour effectuer (303 ; 410) une seconde vérification consistant vérifier si ledit débit effectif mesuré est inférieur à la bande passante préalablement réservée pour ledit flux de données critiques, à laquelle est retranchée la somme d'une bande passante de marge et de la bande passante de tolérance ; et
- des moyens pour, en cas de première vérification positive ou de seconde vérification positive, ajuster (304 ; 411) la réservation de bande passante pour ledit flux de données critiques à une valeur égale à la somme du débit effectif mesuré pour ledit flux de données critiques et de la bande passante de marge.

## Patentansprüche

1. Verfahren zur Bandbreitenverwaltung, das durch eine Vorrichtung zur Verbindung (110) zwischen einem ersten Kommunikationsnetz (101) und einem zweiten Kommunikationsnetz (102) implementiert wird, wobei Ströme mit kritischen Daten und Ströme mit nicht kritischen Daten zwischen dem ersten und dem zweiten Kommunikationsnetz über die Vorrichtung zur Verbindung übertragen werden, wobei die Ströme mit kritischen Daten im Gegensatz zu den Strömen mit nicht kritischen Daten eine Bandbreitenreservierung benötigen, um Durchsatz- und Latenzbeschränkungen zu gewährleisten,
**dadurch gekennzeichnet, dass** die Vorrichtung zur Verbindung einen Mechanismus zum Überwachen der Ströme mit kritischen Daten, die zwischen dem ersten und dem zweiten Kommunikationsnetz über die Vorrichtung zur Verbindung übertragen werden, implementiert, sodass für jeden Strom mit kritischen Daten, der zwischen dem ersten und dem zweiten Kommunikationsnetz über die Vorrichtung zur Verbindung übertragen wird, die Vorrichtung zur Verbindung die folgenden Schritte ausführt:
- Messen (302, 409) eines effektiven Durchsatzes für den Strom mit kritischen Daten;
- Durchführen (303, 410) einer ersten Prüfung, die darin besteht, zu prüfen, ob der gemessene effektive Durchsatz größer als die Summe einer zuvor für den Strom mit kritischen Daten reservierten Bandbreite und einer Toleranzbandbreite ist, wobei die erste Prüfung als Auslöser zum Einstellen der Reservierung der reservierten Bandbreite für den Strom dient;
- Durchführen (303, 410) einer zweiten Prüfung, die darin besteht, zu prüfen, ob der gemessene effektive Durchsatz kleiner als die zuvor für den Strom mit kritischen Daten reservierte Bandbreite ist, von der die Summe einer Margenbandbreite und der Toleranzbandbreite abgezogen wird; und
- im Fall einer ersten positiven Prüfung oder einer zweiten positiven Prüfung Einstellen (304, 411) der Bandbreitenreservierung für den Strom mit kritischen Daten auf einen Wert, der gleich der Summe des tatsächlich gemessenen Durchsatzes für den Strom mit kritischen Daten und der Margenbandbreite ist.

2. Verfahren nach Anspruch 1, **dadurch gekennzeichnet, dass** die Bandbreitenreservierung für den Strom mit kritischen Daten innerhalb der Grenze eines maximalen Endwerts eingestellt wird, der dem Strom mit kritischen Daten zugeordnet ist.

3. Verfahren nach einem der Ansprüche 1 und 2, **dadurch gekennzeichnet, dass** die Vorrichtung zur Verbindung regelmäßig den Mechanismus zum Überwachen für alle Ströme mit kritischen Daten aktiviert, die zwischen dem ersten und dem zweiten Kommunikationsnetz über die Vorrichtung zur Verbindung übertragen werden.

4. Verfahren nach einem der Ansprüche 1 und 2, **dadurch gekennzeichnet, dass** die Vorrichtung zur Verbindung dynamisch für jeden Strom mit kritischen Daten, der zwischen dem ersten und dem zweiten Kommunikationsnetz über die Vorrichtung zur Verbindung übertragen wird, einen Zeitraum zwischen zwei aufeinander folgenden Aktivierungen des Mechanismus zum Überwachen definiert, indem die folgenden Schritte ausgeführt werden:
- Prüfen (602), ob ein Stabilitätskriterium für den effektiven Durchsatz für den Strom mit kritischen Daten eingehalten wird;
- im Fall einer positiven Prüfung bezüglich des Stabilitätskriteriums Verlängern (603) des Zeitraums zwischen zwei aufeinander folgenden Aktivierungen des Mechanismus zum Überwachen des Stroms mit kritischen Daten; und
- im Fall einer negativen Prüfung bezüglich des Stabilitätskriteriums Verkürzen (604) des Zeitraums zwischen zwei aufeinander folgenden Aktivierungen des Mechanismus zum Überwachen des Stroms mit kritischen Daten.

5. Verfahren nach Anspruch 4, **dadurch gekennzeichnet, dass** im Fall einer negativen Prüfung bezüglich des Stabilitätskriteriums der Zeitraum zwischen zwei aufeinander folgenden Aktivierungen des Mechanismus zum Überwachen des Stroms mit kritischen Daten auf einen vordefinierten minimalen Endwert zurückgesetzt wird (604).

6. Verfahren nach einem der Ansprüche 4 und 5, **dadurch gekennzeichnet, dass** das Stabilitätskriterium eingehalten wird, wenn jede Messung des effektiven Durchsatzes für den Strom mit kritischen Daten bei den N letzten Ausführungen, N ≥ 1, kleiner als die reservierte Bandbreite ist, sofern die reservierte Bandbreite während der N vorausgegangenen Ausführungen des Mechanismus zum Überwachen des Stroms mit kritischen Daten nicht eingestellt wurde.

7. Verfahren nach einem der Ansprüche 4 und 5, **dadurch gekennzeichnet, dass** das Stabilitätskriterium eingehalten wird, wenn die reservierte Bandbreite während der N letzten Ausführungen, N ≥ 1, des Mechanismus zum Überwachen des Stroms mit kritischen Daten nicht eingestellt wurde.

8. Computerprogramm, **dadurch gekennzeichnet, dass** es Anweisungen aufweist, um das Verfahren nach einem der Ansprüche 1 bis 7 durch einen Prozessor einer Vorrichtung zur Verbindung zwischen einem ersten Kommunikationsnetz und einem zweiten Kommunikationsnetz auszuführen, wenn das Programm von dem Prozessor ausgeführt wird.

9. Mittel zum Speichern, **dadurch gekennzeichnet, dass** sie ein Computerprogramm speichern, das Anweisungen aufweist, um das Verfahren nach einem der Ansprüche 1 bis 7 durch einen Prozessor einer Vorrichtung zur Verbindung zwischen einem ersten Kommunikationsnetz und einem zweiten Kommunikationsnetz auszuführen, wenn das Programm von dem Prozessor ausgeführt wird.

10. Vorrichtung zur Verbindung (110) zwischen einem ersten Kommunikationsnetz (101) und einem zweiten Kommunikationsnetz (102), wobei Ströme mit kritischen Daten und Ströme mit nicht kritischen Daten zwischen dem ersten und dem zweiten Kommunikationsnetz über die Vorrichtung zur Verbindung übertragen werden, wobei die Ströme mit kritischen Daten im Gegensatz zu den Strömen mit nicht kritischen Daten eine Bandbreitenreservierung benötigen, um Durchsatz- und Latenzbeschränkungen zu gewährleisten,
**dadurch gekennzeichnet, dass** die Vorrichtung zur Verbindung einen Mechanismus zum Überwachen der Ströme mit kritischen Daten, die zwischen dem ersten und dem zweiten Kommunikationsnetz über die Vorrichtung zur Verbindung übertragen werden, implementiert, sodass die Vorrichtung zur Verbindung für jeden Strom mit kritischen Daten, der zwischen dem ersten und dem zweiten Kommunikationsnetz über die Vorrichtung zur Verbindung übertragen wird, Folgendes implementiert:
- Mittel zum Messen (302, 409) eines effektiven Durchsatzes für den Strom mit kritischen Daten;
- Mittel zum Durchführen (303, 410) einer ersten Prüfung, die darin besteht, zu prüfen, ob der gemessene effektive Durchsatz größer als die Summe einer zuvor für den Strom mit kritischen Daten reservierten Bandbreite und einer Toleranzbandbreite ist, wobei die erste Prüfung als Auslöser zum Einstellen der Reservierung der reservierten Bandbreite für den Strom dient;
- Mittel zum Durchführen (303, 410) einer zweiten Prüfung, die darin besteht, zu prüfen, ob der gemessene effektive Durchsatz kleiner als die zuvor für den Strom mit kritischen Daten reservierte Bandbreite ist, von der die Summe einer Margenbandbreite und der Toleranzbandbreite abgezogen wird; und
- im Fall einer ersten positiven Prüfung oder einer zweiten positiven Prüfung Mittel zum Einstellen (304, 411) der Bandbreitenreservierung für den Strom mit kritischen Daten auf einen Wert, der gleich der Summe des tatsächlich gemessenen Durchsatzes für den Strom mit kritischen Daten und der Margenbandbreite ist.

## Claims

1. Bandwidth management method implemented by an interconnection device (110) between a first communication network (101) and a second communication network (102), critical data flows and non-critical data flows transiting between the first and second communication networks via said interconnection device, the critical data flows, unlike the non-critical data flows, needing bandwidth reservation in order to meet bit rate and latency constraints,
**characterized in that** the interconnection device implements a mechanism for monitoring the critical data flows transiting between the first and second communication networks via said interconnection device such that, for each critical data flow transiting between the first and second communication networks via said interconnection device, the interconnection device performs the following steps:
- measuring (302; 409) an effective bit rate of said critical data flow;
- performing (303; 410) a first check consisting in checking whether said measured effective bit rate is greater than the sum of a bandwidth reserved beforehand for said critical data flow and a tolerance bandwidth, the first check serving to trigger an adjustment of the bandwidth reservation reserved for said flow;
- performing (303; 410) a second check consisting in checking whether said measured effective bit rate is less than the bandwidth reserved beforehand for said critical data flow minus the sum of a margin bandwidth and the tolerance bandwidth; and
- in the event of a positive first check or positive second check, adjusting (304; 411) the bandwidth reservation for said critical data flow to a value equal to the sum of the effective bit rate measured for said critical data flow and the margin bandwidth.

2. Method according to Claim 1, **characterized in that** the bandwidth reservation for said critical data flow is adjusted within the limit of a maximum boundary associated with said critical data flow.

3. Method according to either one of Claims 1 and 2, **characterized in that** said interconnection device periodically activates said monitoring mechanism for all of said critical data flows transiting between the first and second communication networks via said interconnection device.

4. Method according to either one of Claims 1 and 2, **characterized in that** said interconnection device, for each critical data flow transiting between the first and second communication networks via said interconnection device, dynamically defines a time period between two successive activations of the monitoring mechanism by performing the following steps:
- checking (602) whether a stability criterion of the effective bit rate of said critical data flow is complied with;
- in the event of a positive check with regard to said stability criterion, extending (603) the time period between two successive activations of the monitoring mechanism for said critical data flow; and
- in the event of a negative check with regard to said stability criterion, reducing (604) the time period between two successive activations of the monitoring mechanism for said critical data flow.

5. Method according to Claim 4, **characterized in that**, in the event of a negative check with regard to said stability criterion, said time period between two successive activations of the monitoring mechanism for said critical data flow is reset (604) to a predefined minimum boundary value.

6. Method according to either one of Claims 4 and 5, **characterized in that** said stability criterion is complied with when each effective bit rate measurement of said critical data flow in the N last executions, N ≥ 1, is less than the reserved bandwidth, in so far as said reserved bandwidth has not been adjusted in said N previous executions of the monitoring mechanism for said critical data flow.

7. Method according to either one of Claims 4 and 5, **characterized in that** said stability criterion is complied with when said reserved bandwidth has not been adjusted in said N last executions, N ≥ 1, of the monitoring mechanism for said critical data flow.

8. Computer program, **characterized in that** it comprises instructions for implementing, by way of a processor of an interconnection device between a first communication network and a second communication network, the method according to any one of Claims 1 to 7 when said program is executed by said processor.

9. Storage means, **characterized in that** they store a computer program comprising instructions for implementing, by way of a processor of an interconnection device between a first communication network and a second communication network, the method according to any one of Claims 1 to 7 when said program is executed by said processor.

10. Interconnection device (110) between a first communication network (101) and a second communication network (102), critical data flows and non-critical data flows transiting between the first and second communication networks via said interconnection device, the critical data flows, unlike the non-critical data flows, needing bandwidth reservation in order to meet bit rate and latency constraints,
**characterized in that** the interconnection device implements a mechanism for monitoring the critical data flows transiting between the first and second communication networks via said interconnection device such that, for each critical data flow transiting between the first and second communication networks via said interconnection device, the interconnection device implements:
- means for measuring (302; 409) an effective bit rate of said critical data flow;
- means for performing (303; 410) a first check consisting in checking whether said measured effective bit rate is greater than the sum of a bandwidth reserved beforehand for said critical data flow and a tolerance bandwidth, the first check serving to trigger an adjustment of the bandwidth reservation reserved for said flow;
- means for performing (303; 410) a second check consisting in checking whether said measured effective bit rate is less than the bandwidth reserved beforehand for said critical data flow minus the sum of a margin bandwidth and the tolerance bandwidth; and
- means for, in the event of a positive first check or positive second check, adjusting (304; 411) the bandwidth reservation for said critical data flow to a value equal to the sum of the effective bit rate measured for said critical data flow and the margin bandwidth.
